**Europäisches Patentamt**

**European Patent Office**

**Office européen des brevets**

(19)

(11) **EP 1 602 951 A1**

(12) # EUROPEAN PATENT APPLICATION

(43) Date of publication:
**07.12.2005 Bulletin 2005/49**

(51) Int Cl.⁷: **G02B 6/16**, G02F 1/01, G02B 6/293

(21) Application number: **05010963.6**

(22) Date of filing: **20.05.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **31.05.2004 KR 2004039331**

(71) Applicant: **LG ELECTRONICS INC.**
**Seoul, 150-721 (KR)**

(72) Inventors:
 • **Ahn, Seh-Won**
  **Songpa-gu Seoul (KR)**
 • **Lee, Sang-Shin**
  **Nowon-Gu Seoul (KR)**

(74) Representative: **Zech, Stefan Markus et al**
 **Meissner, Bolte & Partner GbR**
 **(Depotstrasse 5 1/2, 86199 Augsburg)**
 **Postfach 10 26 05**
 **86016 Augsburg (DE)**

(54) **Optical true-time delay apparatus using a tapered fibre with Bragg grating and thin-film heater and manufacturing method thereof**

(57) An optical true-time delay apparatus comprising: an optical fiber composed of a core (120) and a cladding (110) wrapping the core layer, and having a taper portion (112) formed on an outer circumferential surface of the cladding layer along a circumferential direction thereof so that a distance from the taper portion to the core layer can gradually be changed along a longitudinal direction of the optical fiber; a bragg grating (140) formed in the core layer at a uniform interval along the longitudinal direction of the optical fiber and corresponding to the taper portion; and a heating portion (150) formed to wrap the taper portion, a distance from the heating portion to the bragg grating being gradually changed in a longitudinal direction of the optical fiber, whereby a true-time delay of an optical signal can effectively be controlled by adjusting a temperature of the heating portion to thereby vary an effective index of refraction of the optical fiber bragg grating.

FIG. 2

**Description**

BACKGROUND OF THE INVENTION

1. Field of the Invention

The present invention relates to an optical true-time delay apparatus and manufacturing method thereof, and particularly, to an optical true-time delay apparatus capable of successively controlling a transfer time of an optical signal loading a radio frequency (RF) signal therein and a manufacturing method thereof.

2. Description of the Background Art

Recently, radio traffic has been drastically increased as such mobile communication terminals, wireless LAN, home network, electronic commerce, electronic conference, and the like are being rapidly utilized to the actual life. Since those radio communications system and terminals sensitively react to the peripheral communication environment, there has been required for an antenna system for dealing with a change of the peripheral communication environment. In particular, in case of the mobile communication terminal and the wireless LAN, call quality is sensitive to the peripheral environments such as a traffic by an adjacent user and a position thereof. Accordingly, in order to maintain a superior communication quality by dealing with the change of the peripheral communication circumstances, an array type antenna has been used such that a transmission/reception distribution of electric waves can actively be adjusted according to a request for communication. When using this array type antenna, ian RF signal applied to a plurality of element antennas is differentially delayed, and accordingly an intended angle of RF signal beams discharged can be adjusted. For this reason, a true-time delay apparatus capable of delaying signals appropriately is a core element of the array type antenna.

In the conventional art, because an electric switch using a phase control method was used as the true-time delay apparatus, it was disadvantageous in aspect of a whole size and an accuracy thereof. However, a true-time delay apparatus using an optical effect has recently been used instead of the electric switch.

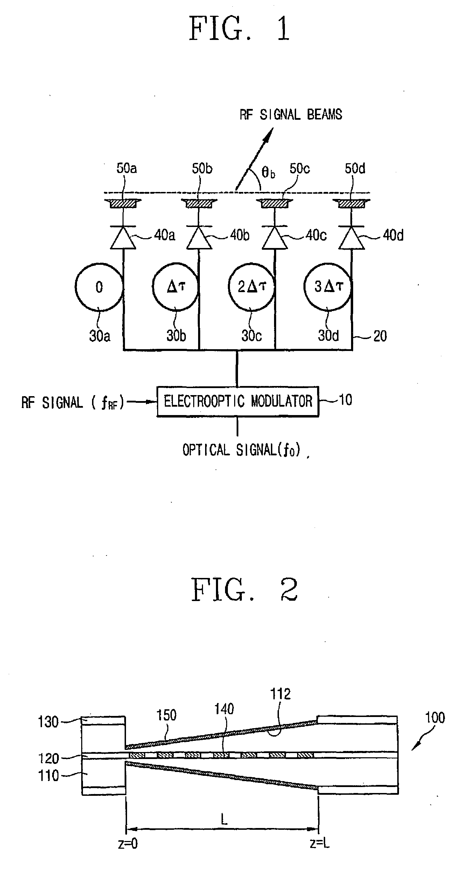

Figure 1 briefly shows a configuration of a typical phase array antenna system using an optical true-time delay unit, and particularly a configuration of an array type antenna structure using an optical RF true-time delay line. As shown in the drawing, four element antennas 50a~50d are connected to optical true-time delay units 30a-30d, respectively.

A method for optically adjusting transmission/reception distribution of an RF signal will now be explained on the basis a structure of the phase array antenna system shown in Figure 1.

An RF signal $f_{RF}$ to be transmitted is applied to an electrooptic modulator 10 to be loaded in an optical signal $f_0$ which is used as a carrier. The RF signal $f_{RF}$ loaded in the optical signal $f_0$ is then provided to optical fiber lines 20 connected to the optical true-time delay units 30a~30d, thereby adjusting a delay time ($\Delta$ T unit) which is set in each optical true-time delay unit 30a~30d. This delayed optical signal is restored to the RF signal by optical detectors 40a~40d. Afterwards, the element antennas 50a~50d are driven to adjust a distribution of RF signal beams which are transmitted and received therethrough.

Here, the optical true-time delay units 30a-30d, as delay lines formed at parts of the optical fiber line 20, are configured to have a time delay for each of them by $\Delta$ $\tau$ unit. The optical true-time delay units 30a~30d determine a scanning direction of the RF signal beams transmitted and received through the element antennas 50a~50d.

Thus, the optical true-time delay units 30a~30d have generally used an optical fiber bragg grating, which only reflects a signal with a specific wavelength. An optical fiber having a bragg grating structure has been used in the conventional art. That is, the bragg grating structure corresponding to a fixed wavelength is formed on the optical line so as to allow an applied wavelength to be reflected at a certain part, and then the reflected beam is re-received to thereby generate a delay.

The delay line using the conventional bragg grating structure is broadly used in two methods. In one method thereof, there is used a chirped fiber bragg grating in which a period of the grating is changed along an ongoing direction of an optical signal and thusly an optical wavelength reflected at each point becomes different. That is, the optical wavelength to be inputted is changed such that the optical wavelength goes on toward the bragg grating structure and thusly changes a reflection position where it is reflected by the grating structure. As a result, a delay time of the RF signal loaded in the optical wavelength can be adjusted. For this method, because the delay time is changed by varying the wavelength of the optical signal in which the RF signal is loaded and accordingly adjusting a position where the optical signal is reflected at the bragg grating, a wavelength variable light source is inevitably required. However, a cost for the wavelength variable light source is considerably high, which results in an increase of manufacturing cost.

In the other method thereof, the delay time of the optical signal to be reflected is adjusted by physically transforming the line (e.g., by curving or pressing the line) in which the bragg grating is formed, to thereby vary the bragg structure, not by changing the wavelength. However, for this method, there is required a mechanical movement for physically transforming the line in which the bragg grating is formed. As a result, a size of the delay unit is increased and reproducibility and reliability thereof are decreased due to a mechanical fatigue. In addition, it is difficult to successively drive the delay units at high speed.

SUMMARY OF THE INVENTION

Therefore, in order to solve those problems, an object of the present invention is to provide an optical true-time delay apparatus for successively and precisely controlling a true-time delay of an RF signal electrically without a mechanical movement by using an optical fiber having a bragg grating with a characteristic that an effective index of refraction thereof is changed according to a variation of temperature, and a manufacturing method thereof.

To achieve these and other advantages and in accordance with the purpose of the present invention, as embodied and broadly described herein, there is provided an optical true-time delay apparatus comprising: an optical fiber composed of a core layer and a cladding layer wrapping the core layer, and having a taper portion formed at an outer circumferential surface of the cladding layer along its circumferential direction so that a distance from the taper portion to the core layer can be gradually changed along a longitudinal direction of the taper portion; a bragg grating formed in the core layer at a uniform interval along the longitudinal direction of the optical fiber and corresponding to the taper portion; and a heating portion formed to wrap the taper portion, a distance from the heating portion to the bragg grating being gradually changed in a longitudinal direction of the optical fiber.

According to another embodiment of the present invention, there is provided a method for manufacturing an optical true-time delay apparatus comprising the steps of: coating an outer circumferential surface of a cladding layer of an optical fiber with an optical fiber protection jacket, the optical fiber having a bragg grating formed in a core layer thereof in part at a uniform interval along the longitudina direction of the optical fiber; patterning the optical fiber protection jacket to thereby expose a part of the cladding layer in which the bragg grating is formed; dipping the optical fiber into an etching solution until the exposed part of the cladding layer is immersed thereinto; forming a taper portion by drawing the optical fiber out of the etching solution according to a predeterminded speed profile and etching the exposed part of the cladding layer so that a distance from the exposed cladding layer of the optical fiber to the bragg grating can be gradually changed along a longitudinal direction of the optical fiber; and forming a heating portion on an outer circumferential surface of the taper portion.

The foregoing and other objects, features, aspects and advantages of the optical true-time delay apparatus and a manufacturing method thereof according to the present invention will become more apparent from the following detailed description of the present invention when drawn in conjunction with the accompanying drawings.

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Figure 1 is a schematic view of a phase array antenna system having a typical optical true-time delay unit;
Figure 2 is a sectional view showing an optical true-time delay apparatus in accordance with a first embodiment of the present invention;
Figure 3 is a sectional view showing an optical true-time delay apparatus in accordance with a second embodiment of the present invention;
Figure 4 is a sectional view showing an optical true-time delay apparatus in accordance with a third embodiment of the present invention;
Figure 5 is a graph showing reflected positions of input light according to a temperature of a heating portion;
Figures 6 to 10 are sectional views sequentially showing a manufacturing procedure for an optical true-time delay apparatus according to an embodiment of the present invention; and
Figure 11 is a sectional view showing a structure in which optical true-time delay apparatuses are integrally arranged in accordance with an embodiment of the present invention.

DETAILED DESCRIPTION OF THE PREFERRED EMBODIMENTS

Reference will now be made in detail to the preferred embodiments of the present invention, examples of which are illustrated in the accompanying drawings.

Hereinafter, an optical true-time delay apparatus according to the present invention will be explained in detail in conjunction with the accompanying drawings.

There may exist many embodiments for an optical true-time delay apparatus according to the present invention, and the preferred embodiments thereof will now be described.

Figure 2 illustrates an optical true-time delay apparatus according to a first embodiment of the present invention.

As shown therein, an optical true-time delay apparatus according to a first embodiment of the present invention includes: an optical fiber 100 composed of a core layer 120 and a cladding layer 110 wrapping the core layer 120, and having a taper portion 112 formed on an outer circumferential surface of the cladding layer 110 along its circumferential direction so that a distance from the cladding layer to the core layer 120 can be gradually changed along its longitudinal direction, for passing an optical signal loading an RF (Radio frequency) signal therein; a bragg grating 140 formed in the core layer 120 at a uniform interval and corresponding to the taper portion 112 in a longitudinal direction of the optical fiber 100; and a heating portion 150 for wrapping the taper portion 112, a distance from the heating portion 150 to the bragg grating 140 being gradually changed along the longitudinal direction of the optical fiber 100.

That is, the taper portion 112 is formed on an outer circumferential surface of the cladding layer 110 of the optical fiber 100 corresponding to a section (referring to section L in the drawing) in which the bragg grating 140 is formed. Here, a distance from the taper portion 140 to the bragg grating 112 is gradually increased from one end (a part of z=0) toward another end (a part of z=L), namely, along an ongoing direction of the optical signal.

At this time, preferably, the taper portion 112 is formed to be symmetrical to in a circumferential direction of the optical fiber 100 on the basis of a part of the core layer 120 having the bragg grating 140 formed therein. However, it is possible to asymmetrically form the taper portion 112 from the core layer 120 depending on its design.

In other words, an shape profile of the taper portion of the cladding layer of the optical fiber for configuring an optical true-time delay apparatus according to the present invention can variously be changed according to processes which will be explained later.

In the taper portion 112 according to the embodiment of the present invention shown in Figure 2, an increase rate of a distance from the bragg grating 140 to the taper portion 112 is constant along a longitudinal direction of the optical fiber 100. That is, the distance from the taper portion 112 to the bragg grating 140 is linearly increased from the one end (z=0) toward the another end (z=L).

The heating portion 150, on the other hand, is formed on an outer circumferential surface of the taper portion 112 according to an shape profile of the taper portion 112. Accordingly, a distance from the heating portion 150 to the bragg grating 140 is also linearly increased from the one end (z=0) of the taper portion 112 toward the another end (z=L) thereof.

Furthermore, preferably, the heating portion 150 is formed of a metal material of which heating value can be controlled according to a voltage power applied from the exterior.

On the other hand, preferably, the core layer 120 is formed of an optical material with a thermooptical characteristic such as silica material, so that its optical characteristic is changed by heat generated from the heating portion 150.

An unexplained reference symbol 130 indicates an optical fiber protection jacket, which is a structure required for forming the taper portion 112 in a manufacturing procedure for the optical true-time delay apparatus of the present invention to be explained later. The optical fiber protection jacket is formed on a surface of the cladding layer excepting the section where the taper portion 112 is formed.

Hereinafter, an operation method for such configured optical true-time delay apparatus in accordance with a first embodiment of the present invention will be explained.

When an optical signal with a certain wavelength in which an RF signal is included is applied through the core layer 120 of the optical fiber 100, the optical signal is reflected on a certain position when passing through the portion where the bragg grating 140 is formed, to thereby return to the direction it has been applied. This reflection time refers to a delay time. At this time, a temperature of the heating portion 150 is varied according to a voltage applied to the heating portion 150, and an effective index of refraction of the bragg grating 140 of which distance from the heating portion is gradually changed is also varied according to a rate of change of the distance.

Thus, the reflected optical wavelength is gradually increased according to a thickness of the cladding layer 110 of the optical fiber 100, and the reflected optical wavelength is differently distributed according to the temperature of the heating portion.

The Wavelength of the optical signal which is reflected by the bragg grating 140 of the optical fiber 100 which has such structure can actually be obtained by an equation as follows.

$$\lambda_B = 2n_{eff}\Lambda_g$$

Here, $n_{ef}$ is an effective index of refraction of the bragg grating 140, and $\Lambda\ g$ is a period of the bragg grating 140.

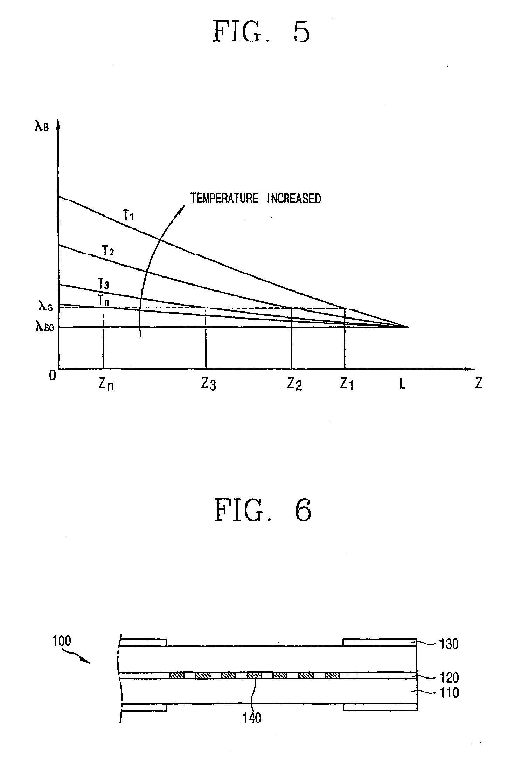

Figure 5 is a graph showing reflected positions of an input optical signal according to a temperature of the heating portion. The graph shows a reflected position z according to a change of temperature of the heating portion (i.e., a change of a size of a voltage applied to the heating portion) when applying an optical signal with a predetermined wavelength $\lambda_s$. Here, $\lambda_{B0}$ is a reflected optical wavelength when there is not any change of the temperature of the bragg grating.

For instance, in case of inputting an optical signal with a wavelength $\lambda_s$, when the temperature of the heating portion 150 is $T_1$, the reflected position is $z_1$, and when the temperature thereof is $T_n$, the reflected position is $z_n$. That is, when the temperature is more increased by the voltage applied to the heating portion 150, the reflected position is closer to the one end (z=0) of the taper portion 110. As a result, the delay time is shorter. Therefore, the reflected position of the applied optical signal can be adjusted by adjusting the voltage applied to the heating portion 150 to thereby control a heating value. According to this, the delay time until the input optical signal is reflected can be controlled by using a relatively simple way, namely, a way for adjusting the voltage.

An optical true-time delay apparatus according to another embodiment of the present invention will now be explained. Here, a shape of the taper portion which is an important part for the present invention as aforementioned will be described in detail with another embodiment. On the other hand, the same configuration as that in the embodiment of the present invention will not be explained again, and components with the same structure will have the same reference symbols.

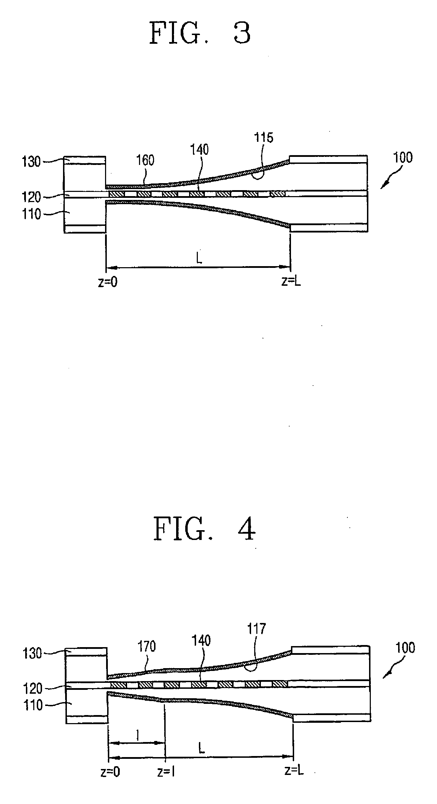

Figure 3 illustrates an optical true-time delay apparatus in accordance with a second embodiment of the present invention.

As shown in the drawing, a taper portion 115 of an optical true-time delay apparatus according to a second embodiment of the present invention is formed such that an increase rate of a distance from the taper portion 115 to the bragg grating 140 is increased along a longitudinal direction of the optical fiber 100.

That is, the increase rate of the distance from the taper portion 115 to the bragg grating 140 is linearly increased from the one end (the part of z=0) of the taper portion 115 toward the another end (the part of z=L).

Accordingly, the increase rate of a distance from a heating portion 160 which is formed according to the shape profile of the taper portion 115 to the bragg grating 140 is also linearly increased from the one end (the part of z=0) of the taper portion 115 toward the another end (the part of z=L) thereof.

Figure 4 illustrates an optical true-time delay apparatus in accordance with a third embodiment of the present invention.

Referring to the drawing, in the optical true-time delay apparatus according to the third embodiment of the present invention, a taper portion 117 is also formed such that an increase rate of a distance from the taper portion 117 to the bragg grating 140 is varied. In more detail, the increase rate of the distance from the taper portion 117 to the bragg grating 140 is constantly maintained up to a certain point along a longitudinal direction of the optical fiber 100, and the increase rate thereof is increased longitudinally after the certain point.

That is, the distance from the taper portion 117 to the bragg grating 140 is linearly increased with a constant increase rate up to a point separated from the one end (the part of z=0) of the taper portion 117 as much as the distance 1. The increase rate of the distance from the point (the part z=1) toward the another end (the part of z=L) of the taper portion 117 is linearly increased.

The taper portion of the present invention, on the other hand, can be formed according to the shape profile as shown in the aforementioned embodiments, and the distance from the taper portion to the bragg grating can be variously varied along the longitudinal direction of the optical fiber.

Here, the operation method for the optical true-time delay apparatus according to the second and third embodiments is the same as that of the first embodiment and thusly will not be explained again.

A manufacturing method for an optical true-time delay apparatus according to an embodiment of the present invention will now be explained.

Figures 6 to 9 are sectional views sequentially showing a manufacturing procedure of the optical true-time delay apparatus according to the aforementioned first embodiment, and especially show a method for forming a taper structure by selectively etching only the cladding layer 110 of the optical fiber which is positioned at a section where the bragg grating is formed.

First, as shown in Figure 6, a surface of the cladding layer 110 of the optical fiber 100 is coated with an optical fiber protection jacket 130, which is capable of protecting the optical fiber 100 from an optical fiber etching solution 300. Afterwards, in order to expose the optical fiber cladding layer in which the bragg grating 140 is formed, the optical fiber protection jacket 130 of the corresponding part is patterned to thereby be removed selectively.

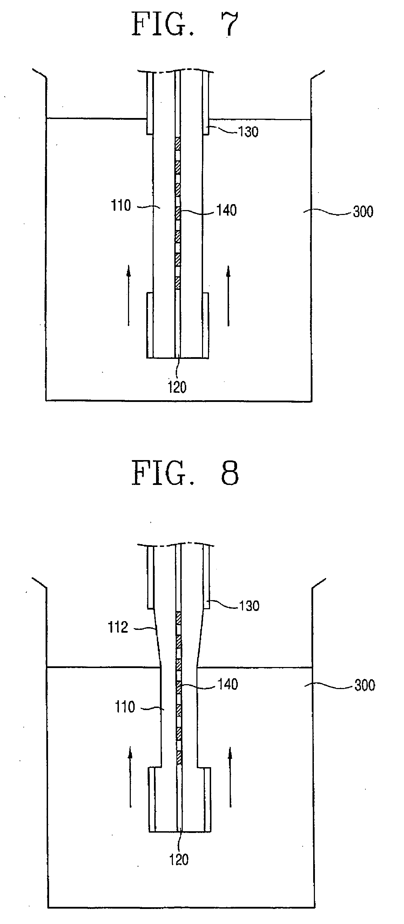

Next, as shown in Figure 7, the optical fiber 100 is dipped in a bath filling with the optical fiber etching solution 300 such as hydrofluoric acid (HF) as deep as the exposed cladding layer 100 is all immersed thereinto. At this time, preferably, the optical fiber 100 is dipped in a perpendicular direction of a surface of the etching solution 300 so that the taper portion 112 which will be formed can be symmetrical on the basis of the core layer 120 having the bragg grating 140 formed therein.

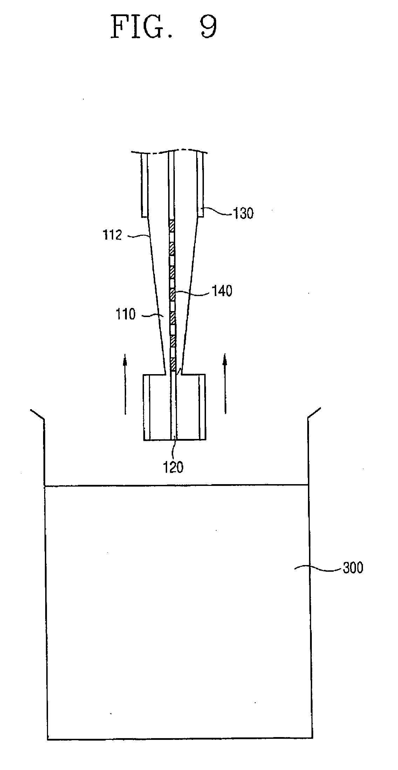

Next, as shown in Figures 8 and 9, the dipped optical fiber is drawn out of the optical fiber etching solution 300 according to a predetermined speed profile, and accordingly a time that the exposed cladding layer 110 of the optical fiber 100 is immersed into the etching solution 300 is varied along the longitudinal direction of the optical fiber 100. As a result, the longer the cladding layer 110 is dipped in the etching solution 300, the more the cladding layer is etched, whereby the taper portion 112 is formed such that the distance from the exposed cladding layer 120 to the bragg grating 140 is gradually changed along a longitudinal direction of the optical fiber 100. For this, preferably, the time and speed that the optical fiber 300 is drawn out of the etching solution 300 may precisely be controlled by using a motor which is controlled by computer.

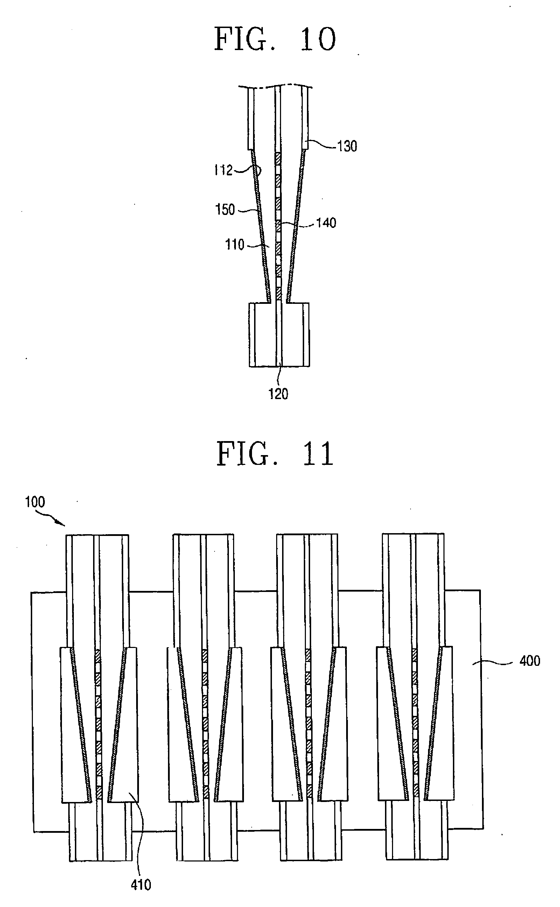

Afterwards, as shown in Figure 10, a heating portion 150 formed of a conductible material such as a metal so as to adjust a heating value according to an external voltage is formed on an outer circumferential surface of such formed taper portion 112, as same as the shape profile of the taper portion 112 by using such metal coating method. As a result, the distance from the bragg grating 140 to the heating portion 150 is gradually changed along the longitudinal direction of the optical fiber 100.

Here, the taper portion 112 of the first embodiment of the present invention can be formed by drawing the optical fiber 100 out of the etching solution 300 at a constant speed so that the increase rate of the distance from the bragg grating 140 to the taper portion 112 can be constant along the longitudinal direction of the optical fiber 100.

Furthermore, the shape profile of the taper portion shown in the second and third embodiments of the present invention can be formed by changing a speed by which the optical fiber 100 is drawn out of the etching solution 300. That is, the speed for drawing the optical fiber 100 out of the etching solution 300 is gradually reduced, thereby forming the taper portion 115 of the second embodiment constructed so that the increase rate of the distance from the taper portion 115 to the bragg grating 140 can be increased along the longitudinal direction of the optical fiber 100. In addition, the optical fiber 100 is drawn out of the etching solution 300 at a constant speed for a certain time and the speed is gradually reduced, thereby forming the shape profile of the taper portion 117 of the third embodiment constructed so that the increase rate of the distance from the taper portion 117 to the bragg grating 140 can be constant up to a predetermined point along the longitudinal direction of the optical fiber 100 and the increase rate can be increased after the predetermined point.

Thus, the profile of the speed by which the optical fiber 100 is drawn out of the etching solution 300 is appropriately adjusted, thereby manufacturing the optical true-time delay apparatus of the present invention with the taper portion constructed with various types of shape profiles in addition to those aforementioned embodiments.

Figure 11 illustrates that a plurality of such optical true-time delay apparatuses 200 according to the present invention are integrated on a substrate so as to apply them to an array type antenna.

That is, a plurality of optical fibers 100 respectively provided with the optical true-time delay apparatus according to the present invention are arranged on a substrate 400. Openings 410 are formed on the substrate 400 so as to form a heating portion by coating a metal material on the optical true-time delay apparatus provided to each optical fiber 100.

Using this method, the optical fiber provided with the optical true-time delay apparatus can effectively be integrated in a small area, so as to be applied to the array type antenna.

As described above, in the optical true-time delay apparatus of the present invention which has been constructed and operated as aforementioned, the heating value generated from the heating portion is changed according to the size of applied voltage, and accordingly the optical fiber bragg grating of which distance from the heating portion is varied according to the longitudinal direction of the optical fiber can have a variable effective index of refraction. As a result, a delay time until an input optical signal is reflected by precisely controlling a voltage can be determined, which results in increasing reliability with respect to performances of the delay apparatus and facilitating a true-time control of the optical signal.

Furthermore, since the effective index of refraction of the bragg grating is easily adjusted by the heating value of the heating portion, there is not required any additional high-priced device such as a device for converting a wavelength of the optical signal. As a result, by integrating the optical true-time delay apparatuses in a small area, an array type antenna system can be minimized and optimized with a minimum cost.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. An optical true-time delay apparatus comprising:

   an optical fiber composed of a core layer and a cladding layer wrapping the core layer, and having a taper portion formed on an outer circumferential surface of the cladding layer along a circumferential direction thereof so that a distance from the taper portion to the core layer can gradually be changed along a longitudinal direction of the optical fiber;
   a bragg grating formed in the core layer at a uniform interval along the longitudinal direction of the optical fiber and corresponding to the taper portion; and
   a heating portion formed to wrap the taper portion, a distance from the heating portion to the bragg grating being gradually changed in a longitudinal direction of the optical fiber.

2. The apparatus of claim 1, wherein the taper portion is formed to be symmetrical in a circumferential direction on the basis of a section of the core layer where the bragg grating is formed.

3. The apparatus of claim 1, wherein the taper portion is formed so that an increase rate of a distance from the taper portion to the bragg grating can be constant along a longitudinal direction of the optical fiber.

4. The apparatus of claim 1, wherein the taper portion is formed so that the increase rate of the distance from the taper portion to the bragg grating can be varied along the longitudinal direction of the optical fiber.

5. The apparatus of claim 4, wherein the increase rate of the distance from the taper portion to the bragg grating is increased along the longitudinal direction of the optical fiber.

6. The apparatus of claim 4, wherein, the increase rate of the distance from the taper portion to the bragg grating is constant up to a predetermined point along a longitudinal direction of the optical fiber, and the increase rate thereof is gradually increased after the predetermined point.

7. The apparatus of claim 1, wherein the optical fiber protection jacket is formed on a surface of the cladding layer except the section where the taper portion is formed.

8. The apparatus of claim 1, wherein the distance from the taper portion to the bragg grating is gradually increased along an ongoing direction of an optical signal passing through the optical fiber.

9. The apparatus of claim 1, wherein the heating portion is formed of a metal material of which heating value is controlled according to the applied voltage power.

10. The apparatus of claim 1, wherein the heating portion is formed according to an shape profile of an outer circumferential surface of the taper portion.

11. The apparatus of claim 1, wherein the core layer is formed of an optical material with a thermooptic characteristic.

12. The apparatus of claim 9, wherein the core layer is formed of a silica material.

13. A manufacturing method for an optical true-time delay apparatus comprising the steps of:

   coating an outer circumferential surface of a cladding layer of an optical fiber with an optical fiber protection jacket, the optical fiber having a bragg grating formed in a core layer thereof in part at a uniform interval along the longitudina direction of the optical fiber;
   patterning the optical fiber protection jacket to thereby expose a part of the cladding layer in which the bragg grating is formed;
   dipping the optical fiber into an etching solution until the exposed part of the cladding layer is immersed thereinto;
   forming a taper portion by drawing the optical fiber out of the etching solution according to a predeterminded speed profile and etching the exposed part of the cladding layer so that a distance from the exposed cladding layer of the optical fiber to the bragg grating can be gradually changed along a longitudinal direction of the optical fiber; and
   forming a heating portion on an outer circumferential surface of the taper portion.

14. The method of claim 13, wherein the optical fiber is dipped toward a direction perpendicular to a surface of the etching solution.

15. The method of claim 13, wherein the optical fiber is drawn out from the etching solution by a constant speed.

16. The method of claim 13, wherein the speed for drawing the optical fiber out of the etching solution is changed.

17. The method of claim 16, wherein the speed for drawing the optical fiber out of the etching solution is gradually reduced.

18. The method of claim 16, wherein the optical fiber is drawn out of the etching solution for a predetermined time at a constant speed, and then the speed is gradually reduced.

19. The method of claim 13, wherein the heating portion is formed by arranging the optical fibers in each of which the taper portion is formed on the substrate having openings therein for exposing the taper portion, and coating the optical fibers with a metal material through the openings.

# FIG. 1

# FIG. 2

# FIG. 3

# FIG. 4

# FIG. 5

# FIG. 6

FIG. 7

FIG. 8

FIG. 9

# FIG. 10

# FIG. 11

**European Patent Office**

**EUROPEAN SEARCH REPORT**

Application Number

EP 05 01 0963

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | N.Q. NGO ET AL.: "ELECTRICALLY TUNABLE DISPERSION COMPENSATOR WITH FIXED CENTER WAVELENGTH USING FIBER BRAGG GRATING" JOURNAL OF LIGHTWAVE TECHNOLOGY, vol. 21, no. 6, 6 June 2003 (2003-06-06), pages 1568-1575, XP002338285 * page 1568, column 2, paragraph 2 - page 1572, column 1, paragraph 2 * * page 1574, column 2, paragraph 1; figure 1 * | 1-4,7-12 | G02B6/16 G02F1/01 G02B6/293 |
| Y | | 5,6 | |
| X | WO 02/075391 A (CIDRA CORPORATION) 26 September 2002 (2002-09-26) * page 16, line 1 - line 26; figures 10-12 * | 1-5,8, 10-12 | |
| Y | | 6 | |
| Y | WO 98/15859 A (NORTHERN TELECOM LIMITED; ROBINSON, ALAN) 16 April 1998 (1998-04-16) * page 3, line 5 - line 16 * * page 6, line 21 - page 7, line 11; figure 17B * | 6 | |
| Y | WO 03/093885 A (E.I. DU PONT DE NEMOURS AND COMPANY) 13 November 2003 (2003-11-13) * page 6, paragraph 1 - page 10, paragraph 4 * | 1-12 | |
| Y | ROGERS J A ET AL: "DISTRIBUTED ON-FIBER THIN FILM HEATERS FOR BRAGG GRATINGS WITH ADJUSTABLE CHIRP" APPLIED PHYSICS LETTERS, AMERICAN INSTITUTE OF PHYSICS. NEW YORK, US, vol. 74, no. 21, 24 May 1999 (1999-05-24), pages 3131-3133, XP000834762 ISSN: 0003-6951 * the whole document * | 1-12 | |

-/--

| | | |
|---|---|---|
| | | TECHNICAL FIELDS SEARCHED (Int.Cl.7) |
| | | G02B G02F |

The present search report has been drawn up for all claims

| Place of search | Date of completion of the search | Examiner |
|---|---|---|
| Munich | 28 July 2005 | Frisch, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | KHIJWANIA S K ET AL: "A novel tunable dispersion slope compensator based on nonlinearly thermally chirped fiber Bragg grating" OPTICS COMMUNICATIONS, NORTH-HOLLAND PUBLISHING CO. AMSTERDAM, NL, vol. 227, no. 1-3, 1 November 2003 (2003-11-01), pages 107-113, XP004470225 ISSN: 0030-4018 * the whole document * | 1-12 | |
| Y | EP 1 327 902 A (LUCENT TECHNOLOGIES INC) 16 July 2003 (2003-07-16) * column 4, line 28 - column 5, line 44; figures 1-4 * | 1-12 | |
| A | WO 01/78200 A (HRL LABORATORIES; IONOV, STANISLAV, I; HRL LABORATORIES, LLC) 18 October 2001 (2001-10-18) * page 12, line 23 - page 13, line 7; figure 5 * | 1-12 | TECHNICAL FIELDS SEARCHED (Int.Cl.7) |
| A | WO 02/27744 A (CIDRA CORPORATION) 4 April 2002 (2002-04-04) * page 4, line 7 - page 8, line 10; figures 5-13 * | 1-12 | |
| A | US 5 420 948 A (NORTHERN TELECOM LIMITED) 30 May 1995 (1995-05-30) * the whole document * | 1-12 | |
| A | WO 96/26458 A (PIRELLI CAVI S.P.A; LAMING, RICHARD, IAN; REEKIE, LAURENCE; DONG, LIAN) 29 August 1996 (1996-08-29) * page 3, line 5 - line 29 * * page 4, line 15 - line 28 * | 1-12 | |

The present search report has been drawn up for all claims

| Place of search | Date of completion of the search | Examiner |
|---|---|---|
| Munich | 28 July 2005 | Frisch, A |

**ANNEX TO THE EUROPEAN SEARCH REPORT
ON EUROPEAN PATENT APPLICATION NO.**
EP 05 01 0963

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2005

| Patent document cited in search report | | Publication date | Patent family member(s) | | Publication date |
|---|---|---|---|---|---|
| WO 02075391 | A | 26-09-2002 | WO | 02075395 A1 | 26-09-2002 |
| | | | WO | 02075391 A2 | 26-09-2002 |
| | | | US | 2003185509 A1 | 02-10-2003 |
| | | | US | 2003174948 A1 | 18-09-2003 |
| | | | US | 2002150336 A1 | 17-10-2002 |
| | | | US | 2003072531 A1 | 17-04-2003 |
| | | | US | 2003035628 A1 | 20-02-2003 |
| WO 9815859 | A | 16-04-1998 | US | 5717799 A | 10-02-1998 |
| | | | CA | 2262681 A1 | 16-04-1998 |
| | | | DE | 69709381 D1 | 31-01-2002 |
| | | | DE | 69709381 T2 | 20-06-2002 |
| | | | EP | 0931274 A1 | 28-07-1999 |
| | | | WO | 9815859 A1 | 16-04-1998 |
| | | | JP | 2001501747 T | 06-02-2001 |
| WO 03093885 | A | 13-11-2003 | EP | 1499915 A2 | 26-01-2005 |
| | | | WO | 03093885 A2 | 13-11-2003 |
| | | | US | 2004071401 A1 | 15-04-2004 |
| EP 1327902 | A | 16-07-2003 | US | 2003133656 A1 | 17-07-2003 |
| | | | DE | 60202433 D1 | 03-02-2005 |
| | | | DE | 60203933 D1 | 02-06-2005 |
| | | | EP | 1327902 A1 | 16-07-2003 |
| | | | EP | 1455218 A1 | 08-09-2004 |
| WO 0178200 | A | 18-10-2001 | US | 6466703 B1 | 15-10-2002 |
| | | | AU | 6291401 A | 23-10-2001 |
| | | | EP | 1293019 A2 | 19-03-2003 |
| | | | JP | 2003530598 T | 14-10-2003 |
| | | | WO | 0178200 A2 | 18-10-2001 |
| | | | US | 2003048971 A1 | 13-03-2003 |
| WO 0227744 | A | 04-04-2002 | AU | 1127402 A | 08-04-2002 |
| | | | WO | 0227744 A2 | 04-04-2002 |
| | | | US | 2003072531 A1 | 17-04-2003 |
| | | | US | 2003035628 A1 | 20-02-2003 |
| US 5420948 | A | 30-05-1995 | GB | 2280968 A | 15-02-1995 |
| WO 9626458 | A | 29-08-1996 | GB | 2300930 A | 20-11-1996 |
| | | | AU | 734849 B2 | 21-06-2001 |
| | | | AU | 3689199 A | 11-11-1999 |
| | | | AU | 710974 B2 | 30-09-1999 |
| | | | AU | 4727596 A | 11-09-1996 |
| | | | BR | 9607407 A | 17-11-1998 |

EPO FORM P0459

For more details about this annex : see Official Journal of the European Patent Office, No. 12/82

**EP 1 602 951 A1**

## ANNEX TO THE EUROPEAN SEARCH REPORT
## ON EUROPEAN PATENT APPLICATION NO.

EP 05 01 0963

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2005

| Patent document cited in search report | | Publication date | Patent family member(s) | | Publication date |
|---|---|---|---|---|---|
| WO 9626458 | A | | CA | 2213572 A1 | 29-08-1996 |
| | | | DE | 69623139 D1 | 26-09-2002 |
| | | | DE | 69623139 T2 | 24-04-2003 |
| | | | DE | 69625338 D1 | 23-01-2003 |
| | | | DE | 69625338 T2 | 28-08-2003 |
| | | | EP | 1008875 A1 | 14-06-2000 |
| | | | EP | 0811175 A2 | 10-12-1997 |
| | | | WO | 9626458 A2 | 29-08-1996 |
| | | | GB | 2329361 A | 24-03-1999 |
| | | | JP | 11504123 T | 06-04-1999 |
| | | | NZ | 301775 A | 28-10-1999 |
| | | | NZ | 336940 A | 28-02-2000 |
| | | | US | 6303041 B1 | 16-10-2001 |
| | | | US | 6169829 B1 | 02-01-2001 |

EPO FORM P0459

For more details about this annex : see Official Journal of the European Patent Office, No. 12/82

17